# EUROPÄISCHE PATENTANMELDUNG

(11) **EP 3 835 101 A1**
(43) Veröffentlichungstag der Anmeldung: **16.06.2021**
(21) Anmeldenummer: 19214886.4
(22) Anmeldetag: 10.12.2019
(51) Int. Cl.: B60K 1/02, B60K 17/28, B60K 17/34, B60K 17/344, B60K 25/00, B60K 25/02

(54) **FAHRZEUGANTRIEB ZUM ZEITGLEICHEN ANTREIBEN EINES FAHRZEUGES UND EINES ARBEITSGERÄTES**

(71) Anmelder: Merkt, Oliver, 56745 Bell (DE)
(72) Erfinder: Merkt, Oliver, 56745 Bell (DE)
(74) Vertreter: Hannke, Christian

(57) **Zusammenfassung**

Die vorliegende Erfindung betrifft ein Fahrzeugantrieb zum zeitgleichen Antreiben eines Fahrzeuges und eines Arbeitsgerätes, das einen Antriebsstrang aufweist mit mindestens einem Antriebsmotor und ein zuschaltbares Verteilergetriebe, welches zum Verteilen der Antriebsleistung an Abtriebseinrichtungen geeignet und bestimmt ist. Das Verteilergetriebe umfasst einen ersten Ausgang für einen ersten Teilabtrieb und einen zweiten Ausgang für einen zweiten Teilabtrieb. Ein Zusatzmotor ist kinetisch derart mit dem ersten oder zweiten Ausgang gekoppelt, dass der erste oder zweite Teilabtrieb durch eine Zusatzleistung des Zusatzmotors antreibbar ist. Die vorliegende Erfindung betrifft weiterhin ein Verfahren zum Umbau eines Antriebsstrangs an einem Fahrzeug mit Allradantrieb zum zeitgleichen Antreiben eines Arbeitsgerätes und des Fahrzeuges.

## Beschreibung

Die vorliegende Erfindung betrifft ein Fahrzeugantrieb zum zeitgleichen Antreiben eines Fahrzeuges und eines Arbeitsgerätes, wobei der Fahrzeugantrieb ein Verteilergetriebe mit einem ersten Ausgang für einen ersten Teilabtrieb und einem zweiten Ausgang für einen zweiten Teilabtrieb umfasst. Ein Zusatzmotor ist kinetisch derart mit dem ersten oder zweiten Ausgang gekoppelt, dass der erste oder zweite Teilabtrieb durch eine Zusatzleistung des Zusatzmotors antreibbar ist. Die vorliegende Erfindung betrifft weiterhin ein Verfahren zum Umbau eines Antriebsstrangs an einem Fahrzeug mit Allradantrieb zum zeitgleichen Antreiben eines Arbeitsgerätes und des Fahrzeuges.

Lastkraftfahrzeuge und Nutzfahrzeuge werden häufig an Orten eingesetzt, wo schwere Arbeiten zu verrichten sind. Dies sind beispielsweise Baustellen, oder Regionen, wo schweres Arbeitsgerät zum Abbau oder der ersten groben Weiterverarbeitung von Rohstoffen gebraucht wird. Derartige Fahrzeuge sind neben dem eigentlichen Fahrgetriebe meist mit einem zusätzlichen Getriebe ausgestatte, welches die zur Verfügung stehende Antriebsleistung des Fahrzeugmotors auf unterschiedliche Abtriebseinrichtungen, beispielsweise Räder oder Arbeitsgeräte verteilen kann.

Durch das Verteilergetriebe kann beispielsweise die Antriebsleistung auf den Betrieb eines an das Fahrzeug angeschlossenen Arbeitsgerätes umgestellt werden, sodass die gesamte Antriebsleistung des Fahrzeugmotors für den Betrieb des Arbeitsgerätes zur Verfügung steht. Allerdings kommt es häufig vor, dass das Fahrzeug aufgrund örtlicher Gegebenheiten, oder weil es das Arbeitsgerät ziehen muss, besonders langsam fahren muss und daher in einen sogenannten Kriechfahrmodus versetzt werden muss. In diesem Fall kann das Verteilergetriebe so umgestellt werden, dass die Antriebsleistung des Fahrzeugmotors für eine solche Kriechfahrt eingesetzt wird, anstelle des Arbeitsgerätes. Das Fahrzeug kann dann möglichst langsam vorwärts und rückwärts bewegt werden.

Ein großer Nachteil derartiger Konstruktionen ist, dass eine Kriechfahrt nur dann stattfinden kann, wenn die Antriebsleistung des Fahrzeugmotors so umgestellt wird, dass ein gleichzeitiger Betrieb eines Arbeitsgerätes nicht mehr möglich ist. Zudem ist es technisch extrem aufwendig, die hohe Antriebsleistung des Fahrzeugmotors derart umzusetzen, dass eine besonders langsame Fahrt möglich ist.

Die Aufgabe der vorliegenden Erfindung ist es daher, einen Fahrzeugantrieb zu entwickeln, der eine besonders langsame Fahrt des Fahrzeugs bei gleichzeitiger Nutzung eines Arbeitsgerätes ermöglicht.

Diese Aufgabe wird gemäß den Merkmalen des Anspruchs 1 gelöst, wonach ein Fahrzeugantrieb zum zeitgleichen Antreiben eines Fahrzeuges und eines Arbeitsgerätes einen Antriebsstrang aufweist, der mindestens einem Antriebsmotor zum Bereitstellen einer Antriebsleistung an mindestens ein Fahrgetriebe zum Wählen von Antriebsübersetzungen umfasst. Der Fahrzeugantrieb weist weiterhin ein zuschaltbares Verteilergetriebe auf, welches zum Verteilen der Antriebsleistung an Abtriebseinrichtungen geeignet und bestimmt ist, und durch mindestens ein Abtriebselement mit dem Fahrgetriebe kinetisch verbindbar ist. Das Verteilergetriebe umfasst einen ersten Ausgang für einen ersten Teilabtrieb und einen zweiten Ausgang für einen zweiten Teilabtrieb. Ein Zusatzmotor ist kinetisch derart mit dem ersten oder zweiten Ausgang gekoppelt, dass der erste oder zweite Teilabtrieb durch eine Zusatzleistung des Zusatzmotors antreibbar ist. Dies hat den Vorteil, dass durch die Antriebsleistung des Antriebsmotors das Arbeitsgerät antreibbar ist und durch eine Zusatzantriebsleistung des Zusatzmotors eine besonders langsame Fahrt des Fahrzeuges realisierbar ist.

Alternativ behält sich der Anmelder vor, auch folgendes zu beanspruchen: Das Verteilergetriebe weist einen ersten Eingang zum kinetischen Koppeln mit dem Fahrgetriebe, einen zweiten Eingang zum Lenken des Verteilergetriebes und einen dritten Eingang zum kinetischen Koppeln des Verteilergetriebes mit einem Zusatzmotor auf, welcher dazu geeignet und bestimmt ist, eine Zusatzleistung zum Antrieb eines Vorder-, oder Hinterradantriebs bereitzustellen.

Der Begriff "Antriebsstrang" meint erfindungsgemäß alle erforderlichen Komponenten die zum Generieren und Übertragen einer Antriebsleistung bis an die jeweilige Abtriebseinrichtungen notwendig sind. Dabei handelt es sich bei "An- und Abtriebselemente", wenn nicht anders erwähnt, im Wesentlichen um Wellenelemente. Bei dem Begriff "Fahrgetriebe" handelt es sich im Sinne der Erfindung um ein Getriebe zum Auswählen eines Ganges des Fahrzeugs.

Vorzugsweise ist das Arbeitsgerät über einen Arbeitsabtrieb beziehungsweise eine erste Abtriebseinrichtung mechanisch und/oder kinetisch mit einem Arbeitsausgang des Verteilergetriebes verbunden. Dabei ist der Arbeitsausgang des Verteilergetriebes sowie der daran angeordnete Arbeitsabtrieb kinetisch mit dem Fahrzeugantrieb gekoppelt.

Idealerweise weist das Fahrzeug einen Allradantrieb auf, welcher an beziehungsweise in dem Verteilergetriebe angeordnet ist. Vorzugsweise ist der erste Teilabtrieb als Hinterradantrieb des Allradantriebs ausgebildet und/oder der zweite Teilabtrieb als Vorderradantrieb des Allradantriebs. Dabei ist es möglich, dass der erste Teilabtrieb, also der Hinterradantrieb ein, zwei, oder mehr Achsen aufweist, sodass durch den Zusatzmotor ein, zwei, oder mehr Achsen mit jeweils mindestens zwei Rädern antreibbar sind.

Dabei ist der Hinterradantrieb beziehungsweise der erste Teilabtrieb durch das Verteilergetriebe hindurch und durch mindestens zwei Ausgänge des Verteilergetriebes kinetisch mit dem Zusatzmotor verbunden. Vorzugsweise ist der Hinterradantrieb beziehungsweise der erste Teilabtrieb durch das Verteilergetriebe hindurch und durch mindestens den ersten und den zweiten Ausgang des Verteilergetriebes kinetisch mit dem Zusatzmotor verbunden. Dabei ist bevorzugt ein Zusatzantriebselement kinetisch und/oder mechanisch derart mit dem zweiten Ausgang und dem Zusatzmotor verbunden, dass der zweite Ausgang als Eingang der Zusatzantriebsleistung ausgebildet ist. Ein Hinterradantrieb ist speziell dann von Vorteil, wenn das Fahrzeug ein schweres Arbeitsgerät ziehen muss und daher die Last weitestgehend auf den hinteren Teil des Fahrzeugs verteilt ist.

Es ist allerdings auch denkbar, dass der Vorderradantrieb beziehungsweise der zweite Teilabtrieb auf ähnliche Weise durch das Verteilergetriebe hindurch und durch mindestens zwei Ausgänge des Verteilergetriebes kinetisch mit dem Zusatzmotor verbunden ist. Dabei ist bevorzugt ein Zusatzantriebselement kinetisch und/oder mechanisch derart mit dem ersten Ausgang und dem Zusatzmotor verbunden, dass der erste Ausgang als Eingang der Zusatzantriebsleistung ausgebildet ist. Ein Vorderradantrieb ist dann vorteilhaft, wenn das Fahrzeug in speziellem Gelände eingesetzt wird, wo häufig die Hauptlast auf dem vorderen Teil des Fahrzeugs liegt, oder das Fahrzeug häufig an Steigungen fährt.

In einer vorteilhaften Ausführungsform ist das Verteilergetriebe derart schaltbar, dass die Abtriebseinrichtungen kumulativ oder alternativ antreibbar sind. Eine derartige Schaltung hat den Vorteil, dass die gesamte Antriebsleistung für das Arbeitsgerät verwendet werden kann, wenn dies aufgrund besonderer Umstände erforderlich ist. Gleichermaßen kann die Antriebsleistung auch auf alle Abtriebseinrichtungen verteilt werden, beispielsweise wenn eine Kriechfahrt des Fahrzeugs während des Betriebs des Arbeitsgeräts notwendig wird.

Es ist weiterhin vorteilhaft, wenn mindestens ein Verteilergetriebeeingang und einer der Ausgänge des Verteilergetriebes schaltbar sind. Vorzugsweise weist das Verteilergetriebe auch einen zweiten oder mehr Eingänge auf, welche schaltbar sind. Bevorzugt sind auch zwei oder mehr Ausgänge des Verteilergetriebes schaltbar. Durch die Schaltung mindestens eines Verteilergetriebeeingangs und mindestens eines Ausgangs ist das Verteilergetriebe beziehungsweise die Verteilung der Antriebsleistung variabel einstellbar, sodass die Antriebsleistung Situationsabhängig jederzeit beliebig auf die Abtriebseinrichtungen verteilt werden kann.

In einer weiteren Ausführungsform ist der Zusatzmotor zwischen dem Antriebsmotor und dem Verteilergetriebe wirkend angeordnet ist. Auf diese Weise kann der Zusatzmotor durch den Antriebsmotor unterstützt werden, sodass Energie gespart werden kann. Es ist aber denkbar, dass der Zusatzmotor separat am Verteilergetriebe wirkend angeordnet ist, sodass das Verteilergetriebe beziehungsweise die daran angeschlossenen Abtriebseinrichtungen durch die kumulierte gesamte Antriebsleistung des Antriebsmotors und des Zusatzmotors profitieren.

Es ist auch denkbar, dass der Zusatzmotor mit einer Energiespeichereinheit verbunden ist, die dafür geeignet und bestimmt ist, Bremsenergie und/oder Antriebsleistung zu speichern und an den Zusatzmotor wieder abzugeben. Idealerweise ist der Zusatzmotor dazu geeignet und bestimmt Energie an einen Teilabtrieb abzugeben um diesen anzutreiben und/oder vom Teilabtrieb erzeugte Energie aufzunehmen und an die Energiespeichereinheit weiterzuleiten, mit der der Zusatzmotor kinetisch und/oder mechanisch verbunden ist. Ein derartiger Mechanismus ermöglicht es, dass Bremsenergie von dem Teilabtrieb auf den Zusatzmotor überführt und in der Energiespeichereinheit gespeichert wird. Dadurch kann die gespeicherte Bremsenergie für beispielsweise eine Kriechfahrt verwendet werden, während gleichzeitig die gesamte Antriebsleistung des Antriebsmotors für den Betrieb des Arbeitsgerätes zur Verfügung steht.

Es ist auch vorteilhaft, wenn der Zusatzmotor als hydrostatischer, oder elektrischer Motor ausgebildet ist. Sowohl hydrostatische, als auch elektrische Motoren ermöglichen ein stufenloses Regulieren der Drehzahl bzw. der daraus resultierenden Geschwindigkeit des Fahrzeuges, sodass ein zusätzlicher Schaltmechanismus nicht benötigt wird.

In einer bevorzugten Ausführungsform ist an dem Zusatzmotor eine Pumpeinheit angeschlossen. Idealerweise ist die Pumpeinheit zwischen dem Fahrgetriebe und dem Zusatzmotor angeordnet, sodass die Pumpeinheit vom Fahrgetriebe antreibbar ist und/oder eine Pumpleistung an den Zusatzmotor übertragbar ist. Vorzugsweise ist die Pumpeinheit als Hydraulikpumpe ausgebildet, sodass die Pumpe und der Zusatzmotor räumlich gut voneinander getrennt somit platzsparend anordenbar sind. Zudem erlaubt eine Kombination eines als Hydraulikmotor ausgebildeten Zusatzmotors und einer Hydraulikpumpe eine kompakte und somit ebenfalls platzsparende Bauform.

Vorteilhaft ist es, wenn der Zusatzmotor durch die Pumpeinheit, den Antriebsmotor und/oder die Energiespeichereinheit antreibbar ist und in dem Antriebsstrang angeordnet ist. Vorzugsweise ist der Zusatzmotor durch die Pumpeinheit oder die Energiespeichereinheit antreibbar, sodass der Zusatzmotor entweder durch die Pumpeinheit oder die Energiespeichereinheit mit Energie versorgbar ist. Idealerweise wird die Pumpeinheit über das Fahrgetriebe mit Antriebsleistung versorgt, wobei die Pumpeinheit diese Antriebsleistung derart übersetzt, dass der kinetisch mit der Pumpeinheit verbundene Zusatzmotor diese Antriebsleistung verarbeiten kann. Es ist allerdings auch möglich, dass eine zweite Pumpeinheit zwischen dem Arbeitsgerät und dem Verteilergetriebe angeordnet ist. Dabei wird diese zweite Pumpeinheit vorzugsweise über das Verteilergetriebe mit Antriebsleistung versorgt.

Es ist auch denkbar, dass der Zusatzmotor durch die Energiespeichereinheit antreibbar ist, sodass der Zusatzmotor unabhängig von der Antriebsleistung des Antriebsmotors mit Leistung versorgbar ist. Dadurch kann beispielsweise der Zusatzmotor für eine Kriechfahrt verwendet werden, während gleichzeitig die gesamte Antriebsleistung des Antriebsmotors für ein Arbeitsgerät zur Verfügung steht. Idealerweise ist der Zusatzmotor sowohl durch die Pumpeinheit, als auch durch die Energiespeichereinheit antreibbar, sodass die zur Verfügung stehende Leistung des Antriebsmotors und des Zusatzmotors situationsabhängig, und flexibel verteilbar ist.

In einer weiteren Ausführungsform ist die Energiespeichereinheit als hydraulische Druckspeichereinheit, elektrischer, elektrochemischer, oder mechanischer Energiespeicher ausgebildet. Vorzugsweise ist die Energiespeichereinheit als hydraulische Druckspeichereinheit ausgebildet, damit die Energiespeichereinheit langlebiger und insbesondere auch bei hohen Temperaturschwankungen funktionsfähig bleibt. Hydraulische Druckspeicher sind besonders verschleißarm und auch bei niedrigen Temperaturen, teilweise unterhalb von 0°C noch betriebsfähig. Es ist aber denkbar, dass die Energiespeichereinheit als mechanischer Druckspeicher, beispielsweise als Schwungrad ausgebildet ist, sodass kurzzeitig sehr viel Energie durch eine hohe Zyklenanzahl des Schwungrads gespeichert werden kann.

In einer Ausführungsform umfasst das Fahrgetriebe mindestens einen ersten Abtriebsausgang zum Übertragen der Antriebsleistung an das Verteilergetriebe und einen zweiten Abtriebsausgang zum Übertragen der Antriebsleistung an die Pumpeinheit und/oder die Energiespeichereinheit. Vorzugsweise umfasst das Fahrgetriebe einen ersten Abtriebsausgang, der kinetisch mit dem Verteilergetriebeeingang verbunden ist und einen zweiten Abtriebsausgang, der kinetisch mit der Pumpeinheit, insbesondere aber der Energiespeichereinheit verbunden ist.

Dadurch, dass das Fahrgetriebe kinetisch sowohl mit dem Verteilergetriebe, als auch mit der Energiespeichereinheit verbunden ist, ist die Antriebsleistung in der Energiespeichereinheit speicherbar, sodass der Zusatzmotor auch dann antreibbar ist, wenn das Fahrgetriebe derart geschaltet ist, dass die gesamte Antriebsleistung an das Verteilergetriebe übersetzt wird. Weiterhin kann durch einfaches Schalten und ohne einen aufwendigen Umbau zwischen einem Antrieb des ersten oder zweiten Abtriebs gewählt werden.

Vorteilhaft ist es, wenn zwischen dem Zusatzmotor und dem Verteilergetriebe ein Planetengetriebe zum Reduzieren einer vom Zusatzmotor abgegebenen Drehzahl angeordnet ist. Es ist auch denkbar, dass zwischen dem Zusatzmotor und dem Verteilergetriebe eine Riemenübersetzung oder ein Frequenzumrichter angeordnet ist, um die Drehzahl zu reduzieren. Vorzugsweise ist allerdings ein Zahnrad oder Reibrad basiertes Planetengetriebe zwischen dem Zusatzmotor und dem Verteilergetriebe angeordnet, um eine gewünschte Übersetzung des Drehmoments und einen hohen Wirkungsgrad zu gewährleisten.

In einer weiteren Ausführungsform sind eine erste dem Verteilergetriebe nachgeordnete Abtriebseinrichtung und wenigstens eine zweite dem Verteilergetriebe nachgeordnete Abtriebseinrichtung voneinander entkoppelbar. Vorzugsweise sind die erste und zweite Abtriebseinrichtung voneienander entkoppelbar. Es ist auch denkbar, dass die erste Abtriebseinrichtung und ein Teilabtrieb der zweiten Abtriebseinrichtung voneinander entkoppelbar sind. Idealerweise sind der erste, also der Arbeistabtrieb und der zweite Teilabtrieb bzw. Hinterradantrieb voneinander entkoppelbar, sodass das kinetisch und/oder mechanisch mit dem Arbeitsabtrieb verbundene Arbeitsgerät unabhängig vom Hinterradantrieb betreibbar ist. Alternativ ist der Vorderradantrieb vom Arbeitsabtrieb entkoppelbar, sodass das Arbeitsgerät unabhängig vom Vorderradantrieb betreibbar ist.

In einer weiteren Ausführungsform weist der Fahrzeugantrieb mindestens einen weiteren Zusatzmotor auf. Mit einem weiteren Zusatzmotor kann die Leistung gesteigert werden und/oder neben der ersten und zweiten Abtriebseinrichtungen mindestens eine weitere Abtriebseinrichtung, beispielsweise für ein zusätzliches Arbeitsgerät oder eine weitere Radachse betrieben werden. Vorzugsweise ist der weitere Zusatzmotor kinetisch mit dem Verteilergetriebe und oder einem anderen Getriebe verbunden. Besonders bevorzugt ist der weitere Zusatzmotor kinetisch mit einem Teilabtrieb verbunden, welcher vom Verteilergetriebe entkoppelt ist. Es ist denkbar, dass dies der erste, oder zweite Teilabtrieb der zweiten Abtriebseinrichtung ist. Idealerweise ist der zweite Teilabtrieb der zweiten Abtriebseinrichtung, also der Vorderradantrieb kinetisch mit dem weiteren Zusatzmotor verbunden, sodass der Vorderradantrieb durch den weiteren Zusatzmotor, und der Hinterradantrieb durch den Zusatzmotor antreibbar ist.

Bestenfalls ist der weitere Zusatzmotor auch mit einer weiteren Energiespeichereinheit und/oder einer weiteren Pumpeinheit verbunden und/oder kinetisch mit einem weiteren Planetengetriebe verbunden. Auf diese Weise sind sowohl der Vorderradantrieb, als auch der Hinterradantrieb jeweils mit einem jeweiligen Zusatzmotor verbunden und durch diesen antreibbar. Es ist auch denkbar, dass der Zusatzmotor und der weitere Zusatzmotor unterschiedliche Leistungen liefern und/oder unterschiedlich ausgebildet sind, bspw. ist der Zusatzmotor als hydraulischer Motor ausgebildet und der weitere Zusatzmotor als Elektromotor.

Die Aufgabe wird auch durch ein Verfahren zum zeitgleichen Antreiben eines Arbeitsgerätes und eines Fahrzeuges gelöst. Das Fahrzeug weist einen Antriebsstrang mit mindestens einem Antriebsmotor zum Bereitstellen einer Antriebsleistung an mindestens ein Fahrgetriebe zum Wählen von Antriebsübersetzungen auf. Das Fahrzeug umfasst weiterhin ein zuschaltbares Verteilergetriebe, welches zum Verteilen der Antriebsleistung an Abtriebseinrichtungen geeignet und bestimmt ist und durch mindestens ein Abtriebselement mit dem Fahrgetriebe kinetisch verbindbar ist. Das Verteilergetriebe wird durch einen Verteilergetriebeeingang mit dem Fahrgetriebe kinetisch gekoppelt und ein Zusatzmotor wird durch einen Ausgang kinetisch mit einem Teilabtrieb derart gekoppelt, dass ein Teilabtrieb durch eine Zusatzleistung des Zusatzmotors angetrieben wird. Dies hat den Vorteil, dass durch die Antriebsleistung des Antriebsmotors das Arbeitsgerät angetrieben wird und durch eine Zusatzantriebsleistung des Zusatzmotors eine besonders langsame Fahrt des Fahrzeuges realisiert wird. Vorzugsweise ist das Verfahren auch mit den zuvor genannten Merkmalen des Fahrzeugantriebs kombinierbar.

Die Aufgabe wird auch durch ein Verfahren zum Umbau eines Antriebsstrangs an einem Fahrzeug mit Allradantrieb zum zeitgleichen Antreiben eines Arbeitsgerätes und des Fahrzeuges gelöst. Das Fahrzeug umfasst einen Antriebsstrang mit mindestens einem Antriebsmotor zum Bereitstellen einer Antriebsleistung an mindestens ein Fahrgetriebe zum Wählen von Antriebsübersetzungen. Das Fahrzeug umfasst auch ein zuschaltbares Verteilergetriebe, welches zum Verteilen der Antriebsleistung an Abtriebseinrichtungen geeignet und bestimmt ist und durch mindestens ein Abtriebselement mit dem Fahrgetriebe kinetisch verbunden ist. Das Verfahren umfasst die Schritte:
a. Mechanisches Entkoppeln eines Teilabtriebs eines Allradabtriebsmechanismus von einem Ausgang des Verteilergetriebes, welches die Antriebsleistung an den Teilabtrieb übersetzt,
b. Kinetisches Koppeln eines Zusatzmotors mit einem anderen Teilabtrieb durch mechanisches Koppeln eines kinetisch mit dem Zusatzmotor verbundenen Zusatzantriebselements mit dem in Schritt a. mechanisch entkoppelten Ausgang, sodass ein anderer mechanisch mit dem Verteilergetriebe gekoppelter Teilabtrieb mit dem Zusatzmotor kinetisch verbunden wird.

Ein derartiger Umbau eines Antriebstranges hat den Vorteil, dass durch den Umbau die Antriebsleistung des Antriebsmotors auf ein Arbeitsgerät übertragen werden kann und dennoch zeitgleich das Fahrzeug durch eine Zusatzantriebsleistung des Zusatzmotors gefahren werden kann. Hierdurch wird zudem eine besonders langsame Fahrt des Fahrzeuges möglich.

In einem ersten Verfahrensschritt wird ein Teilabtrieb eines Allradabtriebsmechanismus, welcher vorzugsweise im oder am Verteilergetriebe angeordnet ist, mechanisch und insbesondere auch kinetisch von einem Ausgang des Verteilergetriebes entkoppelt, welches die Antriebsleistung an den Teilabtrieb übersetzt. Durch das kinetische und mechanische Entkoppeln eines Teilabtriebs des Allradabtriebsmechanismus wird ein Ausgang für eine Abtriebseinrichtung am Verteilergetriebe frei, sodass dieser Ausgang als ein Eingang am Verteilergetriebe nutzbar wird. An den durch das Entkoppeln freigewordenen neuen Eingang kann ein weiterer Antrieb mit dem Verteilergetriebe kinetisch und/oder mechanisch verbunden werden.

Idealerweise wird der zweite Teilabtrieb beziehungsweise der Vorderradantrieb kinetisch und/oder mechanisch von dem zweiten Ausgang beziehungsweise einem Vorderradantriebsausgang entkoppelt, sodass vorteilhafterweise der Hinterradantrieb kinetisch und/oder mechanisch mit dem Verteilergetriebe verbunden bleibt. Ein Hinterradantrieb ist speziell dann von Vorteil, wenn das Fahrzeug ein schweres Arbeitsgerät ziehen muss und daher die Last weitestgehend auf den hinteren Teil des Fahrzeugs verteilt ist.

Es ist allerdings auch denkbar, dass der erste Teilabtrieb beziehungsweise der Hinterradantrieb kinetisch und/oder mechanisch von dem ersten Ausgang beziehungsweise einem Hinterradantriebsausgang entkoppelt wird, wodurch der Vorderradantrieb kinetisch und/oder mechanisch mit dem Verteilergetriebe verbunden bleibt. Ein Vorderradantrieb ist dann vorteilhaft, wenn das Fahrzeug in speziellem Gelände eingesetzt wird, wo häufig die Hauptlast auf dem vorderen Teil des Fahrzeugs liegt, oder das Fahrzeug häufig an Steigungen fährt.

In einem zweiten Verfahrensschritt wird dieser neue Eingang kinetisch und/oder mechanisch mit dem Zusatzmotor gekoppelt. Auf diese Weise wird der Zusatzmotor durch ein mit dem Zusatzmotor verbundenes Zusatzantriebselement mit dem in Schritt a. mechanisch entkoppelten Ausgang gekoppelt, sodass ein anderer mechanisch mit dem Verteilergetriebe gekoppelter Teilabtrieb mit dem Zusatzmotor kinetisch verbunden wird.

Vorzugsweise wird der Zusatzmotor und/oder ein mit dem Zusatzmotor verbundenes Planetengetriebe über ein Zusatzantriebselement kinetisch und mechanisch mit dem zweiten Ausgang beziehungsweise dem Vorderradantriebsausgang verbunden. Auf diese Weise wird der über den ersten Ausgang kinetisch und mechanisch mit dem Verteilergetriebe verbundene erste Teilabtrieb beziehungsweise Hinterradantrieb durch das Verteilergetriebe hindurch kinetisch mit dem Zusatzmotor verbunden. Dies hat den Vorteil, dass eine Kriechfahrt mittels des Hinterradantriebs, und damit meist höher belasteten Bereichs des Fahrzeugs ermöglicht wird.

Es ist allerdings auch denkbar, dass der Zusatzmotor und/oder ein mit dem Zusatzmotor verbundenes Planetengetriebe über ein Zusatzantriebselement kinetisch und mechanisch mit dem ersten Ausgang beziehungsweise dem Hinterradantriebsausgang verbunden wird. Auf diese Weise wird der über den zweiten Ausgang kinetisch und mechanisch mit dem Verteilergetriebe verbundene zweite Teilabtrieb beziehungsweise Vorderradantrieb durch das Verteilergetriebe hindurch kinetisch mit dem Zusatzmotor verbunden. Dies hat den Vorteil, dass im Gelände mit erhöhter Steigung der Vorderradantrieb genutzt werden kann.

Weitere, Ziele, Vorteile, Merkmale und Anwendungsmöglichkeiten der vorliegenden Erfindung ergeben sich aus der nachfolgenden Beschreibung von Ausführungsbeispielen anhand der Zeichnungen. Dabei bilden alle beschriebenen und/oder bildlich dargestellten Merkmale für sich oder in beliebiger sinnvoller Kombination den Gegenstand der vorliegenden Erfindung, auch unabhängig von ihrer Zusammenfassung in den Ansprüchen oder deren Rückbeziehung.

Dabei zeigt:
- Fig. 1: Schematische Seitenansicht eines Fahrzeugs mit einem Antriebsstrang mit Verteilergetriebe, Zusatzmotor und Speichereinheit.
- Fig. 2: Schematische und detaillierte Seitenansicht eines Antriebsstrangs mit Verteilergetriebe, Zusatzmotor und Speichereinheit.

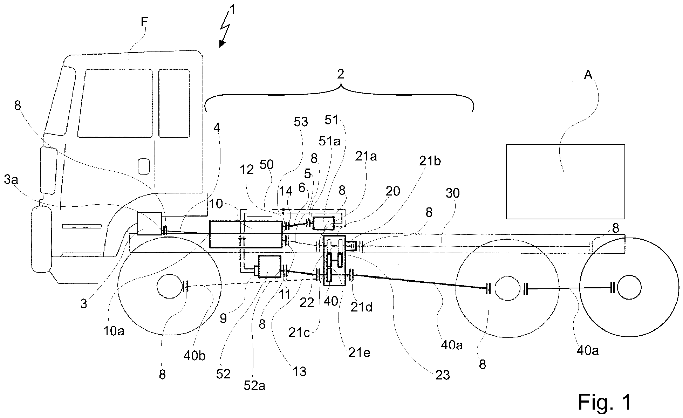

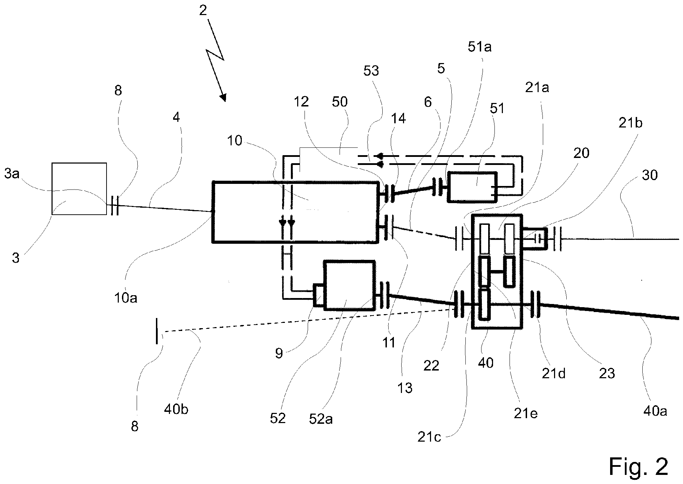

In Figur 1 ist ein Fahrzeug F mit einem Arbeitsgerät A und einem Fahrzeugantrieb 1 dargestellt. Der Fahrzeugantrieb 1 umfasst einen in Figur 2 detailliert dargestellten Antriebsstrang 2 mit einem Antriebsmotor 3, einem Zusatzmotor 9, einem Fahrgetriebe 10 und einem Verteilergetriebe 20. Vorzugsweise weist der Antriebsstrang auch eine Energiespeichereinheit 50, eine Pumpeinheit 51 und/oder ein Planetengetriebe 52 auf. An- und Abtriebselemente, beziehungsweise Übertragungselemente zum Übertragen einer Leistung von einem Bauteil 3, 9, 10, 20, 50, 51, 52, A zu einem anderen Bauteil 3, 9, 10, 20, 50, 51, 52, A sind idealerweise als Wellenelemente und/oder Kardanwellen ausgebildet und vorzugsweise über Kupplungen 8 mit den Bauteilen 3, 9, 10, 20, 50, 51, 52, A gekoppelt.

Der Antriebsmotor 3 ist dem Fahrgetriebe 10 vorgeschaltet und dient der Generierung einer Antriebsleistung, welche über ein Antriebsleistungsübertragungselement 4 an das Fahrgetriebe 10 übertragen wird. Zu diesem Zweck ist das Antriebsleistungsübertragungselement 4 an einem Antriebsmotorausgang 3a des Antriebsmotors 3 und an einem Fahrgetriebeeingang 10a angeordnet, sodass insbesondere der Antriebsmotorausgang 3a mit dem Fahrgetriebeeingang 10a kinetisch und/oder mechanisch verbunden sind.

Das Fahrgetriebe 10 ist dazu geeignet und bestimmt, Antriebsübersetzungen zu wählen, beziehungsweise ein Gang des Fahrzeugs zu wählen, sodass die vom Antriebsmotor 3 generierte Antriebsleistung an das Verteilergetriebe 20 und mindestens eine erste 30 und/oder zweite 40 Abtriebseinrichtung übertragbar ist. Vorzugsweise weist das Fahrgetriebe 10 dazu einen ersten 11 und einen zweiten 12 Abtriebsausgang auf. Der erste 11 Abtriebsausgang ist vorzugsweise durch ein Abtriebselement 5 kinetisch und/oder mechanisch mit einem Verteilergetriebeeingang 21a verbunden, sodass die Antriebsleistung an das Verteilergetriebe 20 übertragbar ist. Der zweite 12 Abtriebsausgang ist vorzugsweise durch ein Zusatzabtriebselement 6 kinetisch und/oder mechanisch mit einem Pumpeingang 51a der Pumpeinheit 51 oder einem Speichereingang der Energiespeichereinheit 50 verbunden.

Das Verteilergetriebe 20 ist zum Verteilen der Antriebsleistung an Abtriebseinrichtungen 30, 40 schaltbar ausgebildet, sodass die gesamte Antriebsleistung an die erste 30 und/oder die zweite 40 Abtriebseinrichtung übertragbar ist. Idealerweise umfasst das Verteilergetriebe 20 den Verteilergetriebeeingang 21a, womit das Verteilergetriebe 20 mit dem Fahrgetriebe 10 gekoppelt ist, einen Arbeitsausgang 21b, einen Eingang 21e zum Lenken beziehungsweise manuellen notschalten des Verteilergetriebes 20 und einen Allradantriebsmechanismus 40. Dabei ist die erste 30 Abtriebseinrichtung als Arbeitsabtrieb 30 ausgebildet, welcher die Antriebsleistung oder die Zusatzleistung an das Arbeitsgerät A überträgt und kinetisch und/oder mechanisch mit dem Arbeitsgerät A verbunden ist. Vorzugsweise ist der Arbeitsabtrieb als Wellenelement oder Kardanwelle ausgebildet und mit dem Arbeitsausgang 21b des Verteilergetriebes 20 gekoppelt.

Der Allradantriebsmechanismus ist vorzugsweise am oder im Verteilergetriebe 20 angeordnet und umfasst einen ersten 21d und zweiten 21c Ausgang, die beide am Verteilergetriebe 20 angeordnet sind, und einen ersten 40d und zweiten 40c Teilabtrieb. Dabei ist entweder an dem ersten 21d Ausgang der erste 40a Teilabtrieb, oder am zweiten 21c Ausgang der zweite Teilabtrieb angeordnet beziehungsweise ist ein Teilabtrieb 40c, d mit dem jeweiligen Ausgang gekoppelt. Vorzugsweise ist der erste 40d Teilabtrieb als Hinterradantrieb und der zweite 40c Teilabtrieb als Vorderradantrieb ausgebildet. Dabei weist der Hinterradantrieb zwei Achsen mit jeweils zwei Rädern auf. Vorzugsweise sind beide Achsen kinetisch miteinander gekoppelt bzw. verbunden.

Da nur ein Teilabtrieb 40c, d mit dem jeweiligen Ausgang 21c, d gekoppelt ist, ist ein anderer Ausgang "frei", sodass dieser andere Ausgang als Eingang 21c, d für eine Zusatzleistung fungiert, die durch den Zusatzmotor 9 generierbar ist. Daraus resultiert, dass entweder der erste 40a Teilabtrieb, also der Hinterradantrieb 40a zumindest kinetisch über den ersten 21d Ausgang, also dem Hinterradantriebsausgang 21d und durch das Verteilergetriebe 20 hindurch mit dem zweiten Ausgang, also dem Vorderradantriebsausgang verbunden ist, oder der zweite 40b Teilabtrieb, also der Vorderradantrieb 40b zumindest kinetisch über den zweiten 21c Ausgang, also dem Vorderradantriebsausgang 21c und durch das Verteilergetriebe 20 hindurch mit dem ersten 21d Ausgang, also dem Hinterradantriebsausgang 21d verbunden ist. Dabei ist entweder der zweite 21c Ausgang, also der Vorderradantriebsausgang 21c als ein Hinterradantriebseingang 21c ausgebildet, oder der erste 21d Ausgang, also der Hinterradantriebsausgang 21d ist als ein Vorderradantriebseingang 21d ausgebildet.

Idealerweise sind der Verteilergetriebeeingang 21a und der Hinterradantriebseingang 21c, beziehungsweise der zweite 21c Ausgang, an einer ersten 22 gemeinsamen Verteilergetriebeseite des Verteilergetriebes 20 angeordnet. Vorzugsweise sind der Arbeitsausgang 21b und der Vorderradantriebseingang, beziehungsweise der erste 21d Ausgang an einer zweiten 23 gemeinsamen Verteilergetriebeseite angeordnet. Bevorzugt ist die erste 22 gemeinsame Verteilergetriebeseite gegenüber einer gemeinsamen Fahrgetriebeseite 14 angeordnet, an der der erste 11 und zweite 12 Abtriebsausgang angeordnet sind.

Bevorzugt ist die Pumpeinheit 51, die Energiespeichereinheit 50, der Zusatzmotor 9 und/oder das Planetengetriebe 52 zwischen dem zweiten 12 Abtriebsausgang des Fahrgetriebes und dem Hinterradantriebseingang 21c oder Vorderradantriebseingang 21d angeordnet, sodass entweder der Hinterradantrieb 40a oder der Vorderradantrieb 40b mit der Zusatzleistung oder der Antriebsleistung betreibbar sind beziehungsweise kinetisch mit dem Zusatzmotor 9 oder dem Antriebsmotor 3 verbunden sind.

Dabei ist die Pumpeinheit 51 kinetisch mit dem Fahrgetriebe 10 und dem Zusatzmotor 9 und/oder mit der Energiespeichereinheit verbunden, sodass die Pumpeinheit 51 über das Fahrgetriebe 10 mit Antriebsleistung versorgbar ist. Vorzugsweise ist die Antriebsleistung durch die Pumpeinheit 51 kinetisch entweder an den Zusatzmotor 9 oder die Energiespeichereinheit 50 übertragbar. Idealerweise ist die durch den Zusatzmotor erzeugbare Zusatzleistung an das Planetengetriebe 52 übertragbar, welches die Drehzahl verringert.

Ein Zusatzantriebselement 13 ist kinetisch und/oder mechanisch mit einem Planetengetriebeausgang 52a des Planetengetriebes 52 und dem Hinter- oder Vorderradantriebseingang 21c, d gekoppelt, sodass die durch den Zusatzmotor 9 erzeugte Zusatzleistung über das Zusatzantriebselement 13 an einen Teilabtrieb 40a, b beziehungsweise den Hinter- 40a oder Vorderradantrieb 40b übertragbar ist. Es ist allerdings auch denkbar, dass der Zusatzmotor 9 kinetisch mit der Energiespeichereinheit 50 und dem Hinter- 40a oder Vorderradantrieb 40b verbunden ist. Auf diese Weise ist durch den Zusatzmotor 9 auch Energie von einer Abtriebseinrichtung 30, 40 beispielsweise dem Hinter- 40a oder Vorderradantrieb 40b an die Energiespeichereinheit 50 übertragbar.

Dementsprechend ist der Zusatzmotor 9 dazu geeignet, Energie an einen Teilabtrieb 40a, b abzugeben um diesen anzutreiben und vom Teilabtrieb 40a, b erzeugte Energie aufzunehmen und an die Energiespeichereinheit 50 weiterzuleiten, mit der der Zusatzmotor 9 kinetisch und/oder mechanisch verbunden ist. So ist beispielsweise Energie, welche insbesondere als Bremsenergie ausgebildet ist, an die Energiespeichereinheit 50 überführbar und von der Energiespeichereinheit 50 zurückleitbar an einen Teilabtrieb 40a, b, insbesondere dem Hinter- 40a oder Vorderradantrieb 40b.

Idealerweise ist der Zusatzmotor 9 als Hydraulikmotor, die Energiespeichereinheit 50 als hydraulischer Druckspeicher und die Pumpeinheit 51 als Hydraulikpumpe ausgebildet. Vorzugsweise sind der Zusatzmotor 9 und die Pumpeinheit 51 und/oder die Energiespeichereinheit 50 durch Hydraulikleitungen 53 miteinander verbunden.

Es ist allerdings auch denkbar, dass der Zusatzmotor 9 als Elektromotor, die Energiespeichereinheit 50 als elektrischer Speicher und die Pumpeinheit 51 als Energiewandler ausgebildet sind. In diesem Fall sind der Zusatzmotor 9, der Energiewandler und/oder die Energiespeichereinheit 50 durch elektrische Leitungen miteinander verbunden.

Der Anmelder behält sich vor, sämtliche in den Anmeldungsunterlagen offenbarten Merkmale als erfindungswesentlich zu beanspruchen, sofern sie einzeln oder in Kombination gegenüber dem Stand der Technik neu sind. Es wird weiterhin darauf hingewiesen, dass in den einzelnen Figuren auch Merkmale beschrieben wurden, welche für sich genommen vorteilhaft sein können. Der Fachmann erkennt unmittelbar, dass ein bestimmtes in einer Figur beschriebenes Merkmal auch ohne die Übernahme weiterer Merkmale aus dieser Figur vorteilhaft sein kann. Ferner erkennt der Fachmann, dass sich auch Vorteile durch eine Kombination mehrerer in einzelnen oder in unterschiedlichen Figuren gezeigter Merkmale ergeben können.

### Bezugszeichenliste

- 1.: Fahrzeugantrieb
- 2.: Antriebsstrang
- 3.: Antriebsmotor
- 3a.: Antriebsmotorausgang
- 4.: Antriebsleistungsübertragungselement
- 5.: Abtriebselement
- 6.: Zusatzabtriebselement
- 8.: Kupplungen
- 9.: Zusatzmotor
- 10.: Fahrgetriebe
- 10a.: Fahrgetriebeeingang
- 11.: erster Abtriebsausgang
- 12.: zweiter Abtriebsausgang
- 13.: Zusatzantriebselement
- 14.: gemeinsame Fahrgetriebeseite
- 20.: Verteilergetriebe
- 21a.: Verteilergetriebeeingang
- 21b.: Arbeitsausgang
- 21c.: zweiter Ausgang / Vorderradantriebsausgang / Hinterradantriebseingang
- 21d.: erster Ausgang / Hinterradantriebsausgang / Vorderradantriebseingang
- 21e.: Eingang zum Lenken
- 22.: erste gemeinsame Verteilergetriebeseite
- 23.: zweite gemeinsame Verteilergetriebeseite
- 30.: erste Abtriebseinrichtung / Arbeitsabtrieb
- 40.: zweite Abtriebseinrichtung / Allradantrieb / Allradantriebsmechanismus
- 40a: erster Teilabtrieb der zweiten Abtriebseinrichtung / Hinterradantrieb
- 40b.: zweiter Teilabtrieb der zweiten Abtriebseinrichtung / Vorderradantrieb
- 50.: Energiespeichereinheit
- 51.: Pumpeinheit
- 51a.: Pumpeingang
- 52.: Planetengetriebe
- 52a.: Planetengetriebeausgang
- 53.: Hydraulikleitungen
- F.: Fahrzeug
- A.: Arbeitsgerät

## Patentansprüche

1. Fahrzeugantrieb (1) zum zeitgleichen Antreiben eines Fahrzeuges und eines Arbeitsgerätes, aufweisend, einen Antriebsstrang (2) mit mindestens einem Antriebsmotor (3) zum Bereitstellen einer Antriebsleistung an mindestens ein Fahrgetriebe (10) zum Wählen von Antriebsübersetzungen, und einem zuschaltbaren Verteilergetriebe (20), welches zum Verteilen der Antriebsleistung an Abtriebseinrichtungen (30, 40a, b) geeignet und bestimmt ist und durch mindestens ein Abtriebselement (5) mit dem Fahrgetriebe (10) kinetisch verbindbar ist,
**dadurch gekennzeichnet, dass**
das Verteilergetriebe (20) einen ersten Ausgang (21d) für einen ersten Teilabtrieb (40a) und einen zweiten Ausgang (21c) für einen zweiten Teilabtrieb (40a) aufweist und ein Zusatzmotor (9) kinetisch derart mit dem ersten (21d) oder zweiten (21c) Ausgang gekoppelt ist, dass der erste (40a) oder zweite (40b) Teilabtrieb durch eine Zusatzleistung des Zusatzmotors (9) antreibbar ist.

2. Fahrzeugantrieb (1) nach Anspruch 1,
**dadurch gekennzeichnet dass**,
das Verteilergetriebe (20) derart schaltbar ist, dass die Abtriebseinrichtungen (30 und/oder 40a, b) kumulativ oder alternativ antreibbar sind.

3. Fahrzeugantrieb (1) nach einem der vorhergehenden Ansprüche,
**dadurch gekennzeichnet dass**,
mindestens ein Verteilergetriebeeingang (21a) und einer der Ausgänge (21c, d) des Verteilergetriebes (20) schaltbar sind.

4. Fahrzeugantrieb (1) nach einem der vorhergehenden Ansprüche,
**dadurch gekennzeichnet dass**,
der Zusatzmotor (9) zwischen dem Antriebsmotor (3) und dem Verteilergetriebe (20) wirkend angeordnet ist.

5. Fahrzeugantrieb (1) nach Anspruch 1,
**dadurch gekennzeichnet dass**,
der Zusatzmotor (9) mit einer Energiespeichereinheit (50) verbunden ist, die dafür geeignet und bestimmt ist, Bremsenergie und/oder Antriebsleistung zu speichern und bei Bedarf an den Zusatzmotor (9) abzugeben.

6. Fahrzeugantrieb (1) nach einem der vorhergehenden Ansprüche,
**dadurch gekennzeichnet dass**,
der Zusatzmotor (9) als hydrostatischer, oder elektrischer Motor ausgebildet ist.

7. Fahrzeugantrieb (1) nach einem der vorhergehenden Ansprüche,
**dadurch gekennzeichnet dass**,
an den Zusatzmotor (9) eine Pumpeinheit (51) angeschlossen ist.

8. Fahrzeugantrieb (1) nach einem der vorhergehenden Ansprüche,
**dadurch gekennzeichnet dass**,
der Zusatzmotor (9) durch die Pumpeinheit (51), den Antriebsmotor (3) und/oder die Energiespeichereinheit (50) antreibbar ist und in dem Antriebsstrang (2) angeordnet ist.

9. Fahrzeugantrieb (1) nach einem der vorhergehenden Ansprüche,
**dadurch gekennzeichnet dass**,
die Energiespeichereinheit (50) als hydraulische Druckspeichereinheit, elektrischer, elektrochemischer oder mechanischer Energiespeicher ausgebildet ist.

10. Fahrzeugantrieb (1) nach einem der vorhergehenden Ansprüche,
**dadurch gekennzeichnet dass**,
das Fahrgetriebe (10) mindestens einen ersten Abtriebsausgang (11) zum Übertragen der Antriebsleistung an das Verteilergetriebe (20) und einen zweiten Abtriebsausgang (12) zum Übertragen der Antriebsleistung an die Pumpeinheit (51) und/oder die Energiespeichereinheit (50).

11. Fahrzeugantrieb (1) nach einem der vorhergehenden Ansprüche,
**dadurch gekennzeichnet dass**,
zwischen dem Zusatzmotor (9) und dem Verteilergetriebe (20) ein Planetengetriebe (52) zum Reduzieren einer vom Zusatzmotor (9) abgegebenen Drehzahl angeordnet ist.

12. Fahrzeugantrieb (1) nach einem der vorhergehenden Ansprüche,
**dadurch gekennzeichnet dass**,
eine erste dem Verteilergetriebe (20) nachgeordnete Abtriebseinrichtung (30) und wenigstens eine zweite dem Verteilergetriebe (20) nachgeordnete Abtriebseinrichtung (40a, b) voneinander entkoppelbar sind.

13. Fahrzeugantrieb (1) nach einem der vorhergehenden Ansprüche,
**dadurch gekennzeichnet dass**,
der Fahrzeugantrieb (1) mindestens einen weiteren Zusatzmotor aufweist.

14. Verfahren zum zeitgleichen Antreiben eines Arbeitsgerätes und eines Fahrzeuges, aufweisend, einen Antriebsstrang (2) mit mindestens einem Antriebsmotor (3) zum Bereitstellen einer Antriebsleistung an mindestens ein Fahrgetriebe (10) zum Wählen von Antriebsübersetzungen, und einem zuschaltbaren Verteilergetriebe (20), welches zum Verteilen der Antriebsleistung an Abtriebseinrichtungen (30, 40a, b) geeignet und bestimmt ist und durch mindestens ein Abtriebselement (5) mit dem Fahrgetriebe (10) kinetisch verbindbar ist,
**dadurch gekennzeichnet, dass**
das Verteilergetriebe (20) durch einen Verteilergetriebeeingang (21a) mit dem Fahrgetriebe (10) kinetisch gekoppelt wird und ein Zusatzmotor (9) durch einen Ausgang (21c, d) kinetisch mit einem Teilabtrieb (40a, b) derart gekoppelt wird, dass ein Teilabtrieb (40a, b) durch eine Zusatzleistung des Zusatzmotors (9) angetrieben wird.

15. Verfahren zum Umbau eines Antriebsstrangs an einem Fahrzeug mit Allradantrieb zum zeitgleichen Antreiben eines Arbeitsgerätes und des Fahrzeuges, aufweisend, einen Antriebsstrang (2) mit mindestens einem Antriebsmotor (3) zum Bereitstellen einer Antriebsleistung an mindestens einem Fahrgetriebe (10) zum Wählen von Antriebsübersetzungen, und einem zuschaltbaren Verteilergetriebe (20), welches zum Verteilen der Antriebsleistung an Abtriebseinrichtungen (30, 40a, b) geeignet und bestimmt ist und durch mindestens ein Abtriebselement (5) mit dem Fahrgetriebe (10) kinetisch verbunden ist, **umfassend die Schritte:**
a. Mechanisches Entkoppeln eines Teilabtriebs (40a, b) eines Allradabtriebsmechanismus (40) von einem Ausgang (21c, d) des Verteilergetriebes (20), welches die Antriebsleistung an den Teilabtrieb (40a, b) übersetzt,
b. Kinetisches Koppeln eines Zusatzmotors (9) mit einem anderen Teilabtrieb (40a, b) durch mechanisches Koppeln eines kinetisch mit dem Zusatzmotor (9) verbundenen Zusatzantriebselements (13) mit dem in Schritt a. mechanisch entkoppelten Ausgang (21c, d), sodass ein anderer mechanisch mit dem Verteilergetriebe (20) gekoppelter Teilabtrieb (40a, b) mit dem Zusatzmotor (9) kinetisch verbunden wird.

## Geänderte Patentansprüche

### Geänderte Patentansprüche gemäss Regel 137(2) EPÜ.

1. Fahrzeugantrieb (1) zum zeitgleichen Antreiben eines Fahrzeuges und eines Arbeitsgerätes (A), aufweisend, einen Antriebsstrang (2) mit mindestens einem Antriebsmotor (3) zum Bereitstellen einer Antriebsleistung an mindestens ein Fahrgetriebe (10) zum Wählen von Antriebsübersetzungen, und einem zuschaltbaren Verteilergetriebe (20), welches zum Verteilen der Antriebsleistung an Abtriebseinrichtungen (30, 40a, b) geeignet und bestimmt ist und durch mindestens ein Abtriebselement (5) mit dem Fahrgetriebe (10) kinetisch verbindbar ist, wobei das Arbeitsgerät (A) über eine erste Abtriebseinrichtung (30) mechanisch und/oder kinetisch mit einem Arbeitsausgang (21b) des Verteilergetriebes (20) verbunden ist,
**dadurch gekennzeichnet, dass**
das Verteilergetriebe (20) einen ersten Ausgang (21 d) für einen ersten Teilabtrieb (40a) und einen zweiten Ausgang (21c) für einen zweiten Teilabtrieb (40b) aufweist und ein Zusatzmotor (9) kinetisch derart mit dem ersten (21 d) oder zweiten (21c) Ausgang gekoppelt ist, dass der erste (40a) oder zweite (40b) Teilabtrieb durch eine Zusatzleistung des Zusatzmotors (9) antreibbar ist, wobei ein Zusatzantriebselement (13) kinetisch und/oder mechanisch derart mit dem ersten (21d) oder zweiten Ausgang (21c) und dem Zusatzmotor (9) verbunden ist, dass der erste (21d) oder zweite Ausgang (21c) als Eingang der Zusatzantriebsleistung ausgebildet ist.

2. Fahrzeugantrieb (1) nach Anspruch 1,
**dadurch gekennzeichnet dass**,
das Verteilergetriebe (20) derart schaltbar ist, dass die Abtriebseinrichtungen (30 und/oder 40a, b) kumulativ oder alternativ antreibbar sind.

3. Fahrzeugantrieb (1) nach einem der vorhergehenden Ansprüche,
**dadurch gekennzeichnet dass**,
mindestens ein Verteilergetriebeeingang (21a) und einer der Ausgänge (21c, d) des Verteilergetriebes (20) schaltbar sind.

4. Fahrzeugantrieb (1) nach einem der vorhergehenden Ansprüche,
**dadurch gekennzeichnet dass**,
der Zusatzmotor (9) zwischen dem Antriebsmotor (3) und dem Verteilergetriebe (20) wirkend angeordnet ist.

5. Fahrzeugantrieb (1) nach Anspruch 1,
**dadurch gekennzeichnet dass**,
der Zusatzmotor (9) mit einer Energiespeichereinheit (50) verbunden ist, die dafür geeignet und bestimmt ist, Bremsenergie und/oder Antriebsleistung zu speichern und bei Bedarf an den Zusatzmotor (9) abzugeben.

6. Fahrzeugantrieb (1) nach einem der vorhergehenden Ansprüche,
**dadurch gekennzeichnet dass**,
der Zusatzmotor (9) als hydrostatischer, oder elektrischer Motor ausgebildet ist.

7. Fahrzeugantrieb (1) nach einem der vorhergehenden Ansprüche,
**dadurch gekennzeichnet dass**,
an den Zusatzmotor (9) eine Pumpeinheit (51) angeschlossen ist.

8. Fahrzeugantrieb (1) nach einem der vorhergehenden Ansprüche,
**dadurch gekennzeichnet dass**,
der Zusatzmotor (9) durch die Pumpeinheit (51), den Antriebsmotor (3) und/oder die Energiespeichereinheit (50) antreibbar ist und in dem Antriebsstrang (2) angeordnet ist.

9. Fahrzeugantrieb (1) nach einem der vorhergehenden Ansprüche,
**dadurch gekennzeichnet dass**,
die Energiespeichereinheit (50) als hydraulische Druckspeichereinheit, elektrischer, elektrochemischer oder mechanischer Energiespeicher ausgebildet ist.

10. Fahrzeugantrieb (1) nach einem der vorhergehenden Ansprüche,
**dadurch gekennzeichnet dass**,
das Fahrgetriebe (10) mindestens einen ersten Abtriebsausgang (11) zum Übertragen der Antriebsleistung an das Verteilergetriebe (20) und einen zweiten Abtriebsausgang (12) zum Übertragen der Antriebsleistung an die Pumpeinheit (51) und/oder die Energiespeichereinheit (50).

11. Fahrzeugantrieb (1) nach einem der vorhergehenden Ansprüche,
**dadurch gekennzeichnet dass**,
zwischen dem Zusatzmotor (9) und dem Verteilergetriebe (20) ein Planetengetriebe (52) zum Reduzieren einer vom Zusatzmotor (9) abgegebenen Drehzahl angeordnet ist.

12. Fahrzeugantrieb (1) nach einem der vorhergehenden Ansprüche,
**dadurch gekennzeichnet dass**,
eine erste dem Verteilergetriebe (20) nachgeordnete Abtriebseinrichtung (30) und wenigstens eine zweite dem Verteilergetriebe (20) nachgeordnete Abtriebseinrichtung (40a, b) voneinander entkoppelbar sind.

13. Fahrzeugantrieb (1) nach einem der vorhergehenden Ansprüche,
**dadurch gekennzeichnet dass**,
der Fahrzeugantrieb (1) mindestens einen weiteren Zusatzmotor aufweist.

14. Verfahren zum zeitgleichen Antreiben eines Arbeitsgerätes und eines Fahrzeuges, aufweisend, einen Antriebsstrang (2) mit mindestens einem Antriebsmotor (3) zum Bereitstellen einer Antriebsleistung an mindestens ein Fahrgetriebe (10) zum Wählen von Antriebsübersetzungen, und einem zuschaltbaren Verteilergetriebe (20), welches zum Verteilen der Antriebsleistung an Abtriebseinrichtungen (30, 40a, b) geeignet und bestimmt ist und durch mindestens ein Abtriebselement (5) mit dem Fahrgetriebe (10) kinetisch verbindbar ist, wobei das Arbeitsgerät (A) über eine erste Abtriebseinrichtung (30) mechanisch und/oder kinetisch mit einem Arbeitsausgang (21b) des Verteilergetriebes (20) verbunden ist,
**dadurch gekennzeichnet, dass**
das Verteilergetriebe (20) durch einen Verteilergetriebeeingang (21a) mit dem Fahrgetriebe (10) kinetisch gekoppelt wird und ein Zusatzmotor (9) durch einen Ausgang (21c, d) kinetisch mit einem Teilabtrieb (40a, b) derart gekoppelt wird, dass ein Teilabtrieb (40a, b) durch eine Zusatzleistung des Zusatzmotors (9) angetrieben wird, wobei ein Zusatzantriebselement (13) kinetisch und/oder mechanisch derart mit dem ersten (21d) oder zweiten Ausgang (21c) und dem Zusatzmotor (9) verbunden ist, dass der erste (21d) oder zweite Ausgang (21c) als Eingang der Zusatzantriebsleistung ausgebildet ist.

15. Verfahren zum Umbau eines Antriebsstrangs an einem Fahrzeug mit Allradantrieb zum zeitgleichen Antreiben eines Arbeitsgerätes und des Fahrzeuges, aufweisend, einen Antriebsstrang (2) mit mindestens einem Antriebsmotor (3) zum Bereitstellen einer Antriebsleistung an mindestens einem Fahrgetriebe (10) zum Wählen von Antriebsübersetzungen, und einem zuschaltbaren Verteilergetriebe (20), welches zum Verteilen der Antriebsleistung an Abtriebseinrichtungen (30, 40a, b) geeignet und bestimmt ist und durch mindestens ein Abtriebselement (5) mit dem Fahrgetriebe (10) kinetisch verbunden ist, wobei das Arbeitsgerät (A) über eine erste Abtriebseinrichtung (30) mechanisch und/oder kinetisch mit einem Arbeitsausgang (21b) des Verteilergetriebes (20) verbunden ist, umfassend die Schritte:
a. Mechanisches Entkoppeln eines Teilabtriebs (40a, b) eines Allradabtriebsmechanismus (40) von einem Ausgang (21c, d) des Verteilergetriebes (20), welches die Antriebsleistung an den Teilabtrieb (40a, b) übersetzt,
b. Kinetisches Koppeln eines Zusatzmotors (9) mit einem anderen Teilabtrieb (40a, b) durch mechanisches Koppeln eines kinetisch mit dem Zusatzmotor (9) verbundenen Zusatzantriebselements (13) mit dem in Schritt a. mechanisch entkoppelten Ausgang (21c, d), sodass ein anderer mechanisch mit dem Verteilergetriebe (20) gekoppelter Teilabtrieb (40a, b) mit dem Zusatzmotor (9) kinetisch verbunden wird.
